# EUROPEAN PATENT APPLICATION

(11) **EP 4 205 556 A1**
(43) Date of publication of application: **05.07.2023**
(21) Application number: 21877370.3
(22) Date of filing: 22.09.2021
(51) Int. Cl.: A23L 7/157, A23L 13/40, A23L 29/212

(54) **OIL/FAT PROCESSED STARCH HAVING EXCELLENT DISPERSIBILITY, PRODUCTION METHOD THEREOF, AND USE THEREOF**

(30) Priority: 06.10.2020 JP 2020169273
(71) Applicant: Nihon Shokuhin Kako Co., Ltd., Tokyo 100-0005 (JP)
(72) Inventor: MORIMOTO, Kazuki, Fuji-shi, Shizuoka 417-8530 (JP); HIRANO, Misa, Fuji-shi, Shizuoka 417-8530 (JP); IDE, Chikage, Fuji-shi, Shizuoka 417-8530 (JP)
(74) Representative: Dehns
(86) International application number: PCT/JP2021/034852
(87) International publication number: WO 2022/075069

(57) **Abstract**

Provided are an oil/fat processed starch having dispersibility and caking properties as well as properties as an oil/fat processed starch, a production method thereof, and application thereof. This oil/fat processed starch is characterized by comprising a first oil/fat having an iodine value of 120 or more and a second oil/fat produced using a different original raw material or different processing method from those of the first oil/fat and having an iodine value of 119 or less. The oil/fat processed starch is produced by the steps of adding the first oil/fat and the second oil/fat to a starch and then performing an aging treatment. The oil/fat processed starch is preferably used as a fried food coating material or an additive for meat processed food products.

## Description

### TECHNICAL FIELD

The present invention relates to a novel oil-or-fat processed starch having exceptional dispersibility and suitable performance as a coating for fried foods or the like, a method for producing the oil-or-fat processed starch, and an application of the oil-or-fat processed starch.

### BACKGROUND ART

In oil-or-fat processed starches, the starch surface is coated with a small amount of an edible oil or fat. Typically, oil-or-fat processed starches are obtained by adding the oil or fat to the starch, mixing the combination, and subjecting the mixture to an aging treatment. Oil-or-fat processed starches can impart a desirable texture and binding properties when used in a coating for fried foods, and therefore are widely used as ingredients in batter liquids or dusting powders for fried foods. In addition, oil-or-fat processed starches are also used in food products processed from land-reared meat, such as sausages, hamburgers, and ham, and in kneaded marine-reared food products such as fish sausages, *kamaboko,* and *chikuwa,* in order to improve yield and texture.

An oil-or fat ordinarily having a high iodine value is used when producing an oil-or-fat processed starch in order to enhance the characteristics thereof. For example, Patent Document 1 discloses a method for producing an oil-or-fat processed starch using an oil-or fat having an iodine value of 130 or greater. Patent Document 2 discloses an oil-or-fat processed starch having a specific slurry viscosity and solubility and indicates that it is preferable to use an oil-or fat having an iodine value of 130 or greater. Patent Document 3 discloses an oil-or-fat processed starch having a specific solubility and emulsification performance and indicates that it is preferable to use an oil-or fat having an iodine value of 100 or greater. Patent Document 4 discloses an oil-or-fat processed starch containing an oil-or fat having an iodine value of 125-170, and a fixed amount of a polyphenol.

### [Related Art Documents]

### [Patent Documents]

[Patent Document 1] Japanese Laid-Open Patent Application No. 54-11247
[Patent Document 2] Japanese Laid-Open Patent Application No. 2005-073506
[Patent Document 3] WO 2012/164801
[Patent Document 4] Japanese Laid-Open Patent Application No. 2018-139565

### DISCLOSURE OF THE INVENTION

### [Problems the Invention is Intended to Solve]

However, an oil-or-fat processed starch formulated using an oil-or fat having a high iodine value has disadvantages in that the starch readily cakes and has a poor dispersibility in water. There are techniques for blending an emulsifier into the oil-or-fat processed starch in order to enhance dispersibility in water, but this approach presents problems in that the performance of the oil-or-fat processed starch (such as binding properties of a coating produced therefrom) decreases and it becomes impossible to meet demand for keeping food products free of additives.

It is therefore an object of the present invention to provide an oil-or-fat processed starch exhibiting satisfactory results for dispersibility and caking properties as well as performance as an oil-or-fat processed starch, a method for producing the oil-or-fat processed starch, and an application of the oil-or-fat processed starch.

### [Means for Solving the Problems]

As a result of thoroughgoing investigations to solve the aforementioned problems, the inventors discovered that using an oil-or fat having an iodine value at or above a fixed level and an oil-or fat having an iodine value at or below a fixed level yields an oil-or-fat processed starch exhibiting satisfactory results for dispersibility and caking properties as well as performance as an oil-or-fat processed starch, thereby perfecting the present invention.

Specifically, the oil-or-fat processed starch according to the present invention is characterized by including: a first oil-or fat having an iodine value of 120 or greater; and a second oil-or fat having an iodine value of 119 or less, the second oil-or fat differing from the first oil-or fat in regard to source raw ingredient or processing method.

In the oil-or-fat processed starch according to the present invention, the difference between the iodine values of the first oil-or fat and the second oil-or fat is preferably 10-170.

The mass ratio of the first oil-or fat and the second oil-or fat is preferably 15:1-1:8.

In the oil-or-fat processed starch according to the present invention, the dispersion time according to the following test of dispersibility in water is preferably within 15 minutes.

### (Test of dispersibility in water)

100 mL of water at 25°C is measured out and poured into a 200-mL beaker, a stirring bar (5 mm (width) × 5 mm (height) × 45 mm (total length)) is inserted into the beaker, and 10 g of a starch sample is added to the water under stirring at a speed of 400 rpm, whereupon the time required for the starch sample to be uniformly dispersed in the water is measured.

Furthermore, in the oil-or-fat processed starch according to the present invention, the slurry viscosity according to the following method for measuring slurry viscosity is preferably 100 mPa·s or greater.

### (Measurement of slurry viscosity)

A starch sample measuring 90 g in terms of dry weight is uniformly dispersed in ice-chilled water using a mixer to formulate a 30%-concentration slurry having a total mass of 300 g. The viscosity of the formulated slurry is measured using a B-type viscometer. The viscosity is measured after a rotor is spun at a speed of 60 rpm for 15 seconds. The rotor used is selected to be a suitable element required by the apparatus in accordance with the measured viscosity.

The method for producing an oil-or-fat processed starch according to the present invention is characterized in comprising a step for: adding a first oil-or fat having an iodine value of 120 or greater and a second oil-or fat having an iodine value of 119 or less to a starch, the second oil-or fat differing from the first oil-or fat in regard to source raw ingredient or processing method; and then subjecting the combination to an aging treatment.

In the method for producing an oil-or-fat processed starch according to the present invention, the difference between the iodine values of the first oil-or fat and the second oil-or fat is preferably 10-170.

The mass ratio of the first oil-or-fat and the second oil-or fat is preferably 15:1-1:8.

The coating for a fried food product according to the present invention includes the aforementioned oil-or-fat processed starch.

The fried food according to the present invention has a coating that contains the aforementioned oil-or-fat processed starch.

The additive for a processed-meat food product according to the present invention includes the aforementioned oil-or-fat processed starch.

The processed-meat food product according to the present invention includes the aforementioned oil-or-fat processed starch.

### [Effect of the Invention]

According to the present invention, it is possible to obtain an oil-or-fat processed starch exhibiting enhanced dispersibility in water and improved caking properties as well as exhibiting an effect when added to a food product. Specifically, using the oil-or-fat processed starch makes it possible to produce a coating for fried foods that has high adhesiveness or to produce processed-meat food products having an exceptional texture without compromising operation efficiency. Furthermore, the oil-or-fat processed starch according to the present invention does not readily cake and therefore is suited to being stored in a paper bag or the like.

### MODE FOR CARRYING OUT THE INVENTION

In the oil-or-fat processed starch according to the present invention, an oil-or fat is bonded to at least some of the starch particle surfaces so that the physical properties of the surfaces are changed. The oil-or-fat processed starch is obtained by adding the oil-or fat to the starch, mixing the combination, and subjecting the mixture to an aging treatment at a temperature equal to or higher than normal temperature. This yields a processed starch having characteristics different from those of a processed starch obtained merely by adding the oil-or fat to the starch and mixing the combination. Specifically, bonding the oil-or fat to at least some of the starch particle surfaces makes it possible to hydrophobize the starch surface and to raise the affinity of the starch with respect to, e.g., proteins.

The degree of hydrophobization of the starch, which affects the performance of the oil-or-fat processed starch, can be measured using the viscosity of a starch slurry. When the degree of hydrophobization is high, the starch slurry will be whippable, whereby the slurry viscosity will increase. An oil-or-fat processed starch having a high slurry viscosity has exceptional performance, and it is well known that using an oil-or-fat processed starch having such performance makes it possible to obtain a coating for fried foods that has high adhesiveness or to obtain processed-meat food products having an exceptional texture. From the standpoint of performance, the oil-or-fat processed starch according to the present invention is preferably such that the viscosity of a slurry having a starch concentration of 30 mass% is 100 mPa·s or greater.

There is no particular limitation as to the starch used as a raw ingredient in the oil-or-fat processed starch according to the present invention, provided that the starch can be used for food. Examples include corn starch, tapioca, rice starch, wheat starch, potato starch, sweet potato starch, mung bean starch, dogtooth-violet starch, kudzu starch, bracken starch, and sago starch. Among these starches, tapioca and/or corn starch are preferred from the standpoint of cost and effect, and tapioca is particularly preferred. In addition to ordinary starches, it is also permissible to use starch variants that are enhanced through breeding or genetic-engineering procedures, such as non-glutinous, waxy, or high-amylose variants of any of the aforementioned starches.

Furthermore, in addition to an unprocessed raw starch, a processed starch that has been subjected to a variety of processing treatments can be used, in the present invention, as the starch serving as a raw ingredient. Specifically, it is permissible to use a starch that has been subjected to: a chemical modification treatment such as oxidation, esterification, etherification, or cross-linking; a processing treatment such as gelatinization, granulation, moist-heat treatment, ball-mill treatment, pulverization, heating, hot-water treatment, bleaching, sterilization, acid treatment, alkali treatment, or enzyme treatment; or any two or more of the aforementioned treatments. Among starches subjected to these processes, it is preferable to use cross-linked starches, and particularly preferable to use phosphoric acid cross-linked starches, when using the oil-or-fat processed starch in a coating for fried foods.

The oil-or-fat processed starch according to the present invention is obtained by using, in combination as the oil-or-fat, a first oil-or-fat having an iodine value of 120 or greater, and a second oil-or-fat having an iodine value of 119 or less, the second oil-or-fat differing from the first oil-or-fat in regard to source raw ingredient or processing method. "Differing in regard to source raw ingredient" also includes cases in which the raw ingredient of the first oil-or-fat and the raw ingredient of the second oil-or-fat differ from one another even in terms of cultivar; for example, high-linoleic sunflower oil and high-oleic sunflower oil are both types of sunflower oil but are considered to be different source raw ingredients. "Differing in regard to processing method" also includes cases in which, for example, even if oils or fats are obtained from the same raw ingredient, the oils or fats have different fatty acid compositions due to, e.g., hydrogenation, transesterification, or fractionation treatments.

Examples of the first oil or fat having an iodine value of 120 or greater include: oils or fats, as well as formulated oils (e.g., mixed oils or fats, or substances in which an additive is blended into an oil or fat), that can be used for food and that have iodine values within the aforementioned range; and mixtures thereof. Specific examples include linseed oil, perilla oil, perilla extract oil, high-linoleic safflower oil, high-linoleic sunflower oil, corn oil, grapeseed oil, soybean oil, fish oil, and algae oil. Examples of the second oil or fat having an iodine value of 119 or less include: oils or fats, as well as formulated oils, that can be used for food and that have iodine values within the aforementioned range; and mixtures thereof. Specific examples include canola oil, high-oleic safflower oil, high-oleic sunflower oil, palm oil, coconut oil, and hydrogenated oils that are hydrogenated such that the iodine value reaches 119 or less.

From the standpoint of the performance of the oil-or-fat processed starch, the iodine value of the first oil or fat having an iodine value of 120 or greater can be set to 120-200, preferably 130-200, and more preferably 140-200. Similarly, from the standpoint of performance, the iodine value of the second oil or fat having an iodine value of 119 or less is preferably set to 115 or less, more preferably 110 or less, and particularly preferably 100 or less. It is not necessary to have a lower limit to the iodine value of the second oil or fat having an iodine value of 119 or less; however, from the standpoint of performance, the lower limit can be set to 30 or greater, preferably 40 or greater, and more preferably 70 or greater. For the first oil or fat having an iodine value of 120 or greater, the oils or fats described above may be used alone, or a plurality thereof may be used in combination. Similarly, for the second oil or fat having an iodine value of 119 or less, the oils or fats described above may be used alone, or a plurality thereof may be used in combination. In addition, the oils or fats used in the present invention are preferably liquid oils, in consideration of ability to mix with the starch and operation efficiency.

In the combination of the first oil or fat having an iodine value of 120 or greater and the second oil or fat having an iodine value of 119 or less, the difference between the iodine values (or, in cases where three or more oils or fats are combined, the difference between the highest iodine value and the lowest iodine value) is preferably 10-170, more preferably 20-160, and particularly preferably 30-150. Setting the difference between the iodine values within this range makes it possible to enhance the effect of the present invention.

The mass ratio of the first oil or fat having an iodine value of 120 or greater and the second oil or fat having an iodine value of 119 or less is preferably 15:1-1:8, more preferably 12:1-1:8, and particularly preferably 8:1-1:7. Employing this mass ratio makes it possible to enhance the effect of the present invention.

The iodine value of an oil or fat is an index of the total number of unsaturated double bonds present in a fatty acid and is measured in accordance with "2.3.4.1-2013 Iodine value (Wiis-cyclohexane method)" in Standard Methods for the Analysis of Fats, Oils and Related Materials (Japan Oil Chemists' Society).

The amount of oils or fats added to the starch when obtaining the oil-or-fat processed starch according to the present invention is preferably 0.01-5 parts by mass, and more preferably 0.03-2 parts by mass, per 100 parts by mass of the starch. When the amount added is less than 0.01 parts by mass, the oils or fats will not sufficiently bond to the starch particle surfaces, and the effect for improving the characteristics of the starch will tend to weaken. Conversely, when the amount of oils or fats added to the starch is greater than 5 parts by mass per 100 parts by mass of the starch, the powder fluidity of the starch and operability will tend to worsen, and, the scent of the oils or fats will strengthen and tend to negatively affect the flavor of the food product. There is no particular limitation as to the method for adding the oils or fats to the starch, provided that the oils or fats can be dispersed in the starch; e.g., the oils or fats can be added through ordinary stir-mixing, airflow mixing, spray atomization, or other normal methods. The first oil or fat and the second oil or fat may be added to the starch separately from one another or may be mixed in advance and added to the starch together. There is no particular limitation as to the temperature of the starch when the oils or fats are added thereto; e.g., the oils or fats may be added to a normal-temperature starch or to a preheated starch. Similarly, it is permissible to add preheated oils or fats to the starch.

An emulsifier may also be added to the starch together with the oils or fats when obtaining the oil-or-fat processed starch according to the present invention. Examples of the emulsifier include glycerin fatty acid esters, polyglycerin fatty acid esters, organic acid monoglycerides, sorbitan fatty acid esters, propylene glycol fatty acid esters, sucrose fatty acid esters, and lecithin. Combinations of these emulsifiers may also be used. When the emulsifier is added, the amount thereof added is preferably 10-1,000 parts by mass, and more preferably 20-500 parts by mass, per 100 parts by mass of the oils or fats. However, it is preferable not to incorporate an emulsifier into the oil-or-fat processed starch according to the present invention, in consideration of the intent of the present invention.

Furthermore, it is also permissible to add soy flour, soybean proteins, pea proteins, or other edible protein ingredients (e.g., vegetable-protein ingredients) together with the oils or fats when obtaining the oil-or-fat processed starch according to the present invention. There are cases where adding edible protein ingredients makes it possible to enhance the dispersibility or performance of the oil-or-fat processed starch.

It is also permissible to add a polyphenol together with the oils or fats when obtaining the oil-or-fat processed starch, as indicated in Patent Document 4. There are cases where adding a polyphenol makes it possible to enhance the dispersibility or performance of the oil-or-fat processed starch, but the cost and flavor of the oil-or-fat processed starch can be compromised thereby; therefore, it is preferable not to add any polyphenols to the oil-or-fat processed starch according to the present invention, in consideration of, *inter alia,* making it possible to sufficiently enhance dispersibility in the present invention.

The aging treatment can be carried out by treating a mixture of the starch, the oils or fats, and other raw ingredients such as the emulsifier (as needed) for a fixed period at a temperature equal to or higher than normal temperature (e.g., 10°C; preferably 15°C) in a state in which the mixture has been introduced into a variety of reactors, extruders, dryers, tanks, containers, packaging, etc. The aforementioned treatment will proceed as long as the temperature is equal to or higher than normal temperature, the time required for aging being lower at higher temperatures. Specifically, it is possible to implement the aging treatment by allowing the mixture to stand at a temperature equal to or higher than normal temperature, and it is also possible to implement the aging treatment (heating aging treatment) at a higher temperature and in a shorter time by heating the mixture. In the aging treatment, it is necessary to set conditions such that excessive decomposition of the raw-ingredient starch does not occur. The aging temperature in this case is preferably 30-180°C, and more preferably 50-160°C. The aging time can be reduced commensurately with an increase in temperature, but is preferably 30 minutes to 2 months, and more preferably 1 hour to 1 month. The aging treatment may be carried out after the oils or fats are added to the starch and the combination is mixed, or may be carried out in the same process as the addition of the oils or fats by adding the oils or fats to the starch and mixing the combination in a heated state.

The oil-or-fat processed starch according to the present invention can be used by being blended with a variety of food products. There is no particular limitation as to the type of food products; e.g., the oil-or-fat processed starch can be used as a raw ingredient of a coating for fried foods, and specifically can be used as a raw ingredient of a coating such as batter or dusting powder. For an oil-or-fat processed starch to be used in a batter, because it will be necessary to mix the oil-or-fat processed starch into water or the like, adjustment time will be required when the dispersibility of the oil or-fat processed starch is poor, even spheroidal aggregations will form, and the batter will be non-uniform, these will be undesirable. However, the oil-or-fat processed starch according to the present invention has the characteristic of having exceptional dispersibility and is advantageous in this regard. Additionally, for an oil-or-fat processed starch to be used in a dusting powder for fried foods, because a batter liquid will not readily adhere to a main ingredient after application of the dusting powder due to the poorly dispersible oil-or-fat processed starch having poor compatibility with water, even resulting in peeling of the coating, these will be undesirable. However, the oil-or-fat processed starch according to the present invention has the characteristic of having excellent compatibility with water and is advantageous in this regard.

The amount of the oil-or-fat processed starch according to the present invention that is added to the food product is to be set, as appropriate, in accordance with the type of food product. In the case of a coating for fried foods, the oil-or-fat processed starch can be blended into the coating for fried foods in an amount of 0.1-100 mass%, preferably 1-100 mass%, and more preferably 20-100 mass%. Setting the blending amount of the oil-or-fat processed starch to within this range makes it possible to sufficiently enhance the binding properties of the coating.

The oil-or-fat processed starch according to the present invention may be added alone to the coating for fried foods, but it is also permissible to blend components other than the oil-or-fat processed starch according to the present invention into the coating for fried foods, examples of such components including: wheat flour, corn flour, soy flour, and other flours; starches; leavening agents; whole eggs, egg whites, and other forms of eggs, or processed goods thereof; emulsifiers; thickeners; table salt; saccharides; and spices.

The method for producing fried foods according to the present invention is characterized in that the aforementioned coating for fried foods is applied to a main ingredient and the resulting article is then subjected to a deep-frying treatment.

Examples of a fried food obtained using this coating for fried foods include *kara-age,* tempura, *tatsuta-age,* fried chicken, chicken cutlets, pork cutlets, beef cutlets, minced-meat cutlets, croquettes, fried shrimp, rings of fried squid, and fritters.

The fried food in the present invention is not limited to being deep-fried as usual, but rather may be a so-called non-fried food product obtained through cooking with heat using a frying pan, microwave oven, oven, oven range, convection oven, or the like.

The oil-or-fat processed starch according to the present invention can also be used as an additive in a processed-meat food product. The processed-meat food products in the present invention include not only so-called food products processed from land-reared meat, in which livestock meat, poultry meat, or the like is processed, but also food products processed from seafood meat, in which seafood meat is processed.

The additive according to the present invention can be used in a processed-meat food product by being blended directly with livestock meat, seafood meat, or the like as a raw ingredient of the processed-meat food product, or can be used as a raw ingredient of a liquid additive such as a liquid seasoning, dipping liquid, or pickling liquid.

Typically, when an oil-or-fat processed starch is used in a liquid additive, problems are presented in that it will be necessary to mix the oil or-fat processed starch into water or the like, adjustment time will be required when the dispersibility of the oil or-fat processed starch is poor, spheroidal aggregations will be able to form, and the resultant processed-meat food product will be non-uniform. Similarly, even when an oil-or-fat processed starch is blended directly with another raw ingredient such as ground meat, surimi, condiments, or vegetables and the combination is mixed, the dispersibility of the oil-or-fat processed starch is important from the standpoint of operation efficiency and uniformity. The oil-or-fat processed starch according to the present invention has the characteristic of having exceptional dispersibility and is advantageous in this regard.

The oil-or-fat processed starch according to the present invention can be blended into the processed-meat food product in an amount of 0.1-15 mass%, preferably 1-13 mass%, of all of the raw ingredients prior to heating. Setting the blending amount of the oil-or-fat processed starch to within this range makes it possible to obtain a processed-meat food product having exceptional texture while raising the yield rate after cooking with heat.

It is also permissible to blend components other than the land-reared meat or seafood meat and the oil-or-fat processed starch according to the present invention into the processed-meat food product according to the present invention, examples of such components including vegetables, eggs, plant-based proteins, condiments, flours, starches, saccharides, salts, spices, colorants, and preservatives.

The processed-meat food product according to the present invention can be obtained by blending at least the oil-or-fat processed starch according to the present invention into a raw ingredient containing land-reared meat or seafood meat, molding the combination as necessary, and subjecting the molded article to heat treatment. There is no particular limitation as to the type of food product processed from land-reared meat, which is one form of processed-meat food product. Examples include ham, pressed ham, bacon, roast pork, cutlets, *kara-age,* sausages, hamburgers, meatballs, minced-meat cutlets, fried chicken, chicken nuggets, cabbage rolls, *gyoza,* steamed dumplings, Chinese-style dumplings, meatloaf, steak, grilled meat, roast beef, and restructured meat. Similarly, examples of food products processed from seafood meat, which are another form of processed-meat food products, include *kamaboko,* imitation crab meat, imitation shrimp meat, *chikuwa, satsuma-age, hanpen,* fish sausages, *datemaki, narutomaki,* fish dumplings, frozen surimi, fried shrimp, and grilled fish.

The method for treating the land-reared meat or seafood meat, the blending compositions of the raw ingredients and auxiliary raw ingredients, the method for adding the raw ingredients, the method for molding a dough, and the method for cooking with heat or the like are to be carried out in conformance with methods known in the prior art in accordance with the type of processed-meat food product and are not particularly limited. It is possible to use, as the raw-ingredient land-reared meat, e.g.: sub-primal cuts of meat from livestock such as cows, pigs, sheep, goats, or horses, or from poultry such as chickens, domestic ducks, wild ducks, geese, or quail; liver or other internal organs from such livestock or poultry; or minced or ground meat obtained by finely chopping such meat. However, there is no particular limitation as to the raw-ingredient land-reared meat. In addition, it is possible to use, as the raw-ingredient seafood meat, e.g.: flesh from walleye pollock, white croaker, grayfish, cutlassfish, flounder, salmon, Okhotsk Atka mackerel, sardine, horse mackerel, shrimp, squid, or shellfish; or surimi obtained by processing such flesh. However, there is no particular limitation as to the raw-ingredient seafood meat. In addition, meat substitutes (vegetable meat), in which part or all of the land-reared meat or seafood meat is substituted with non-animal ingredients such as soybean proteins, and processed food products in which such a meat substitute is used are also included among the processed-meat food products in the present invention.

As described above, the oil-or-fat processed starch according to the present invention not only contributes to the performance of fried food products and processed-meat food products and to the efficiency of operations for producing the same, but also does not readily form into clumps even when stored in a state in which a load is applied thereto and moreover is suited to being stored in a paper bag or the like due to having the characteristic of being resistant to caking.

In the oil-or-fat processed starch according to the present invention, the dispersion time in the test of dispersibility in water described in the examples below is preferably within 15 minutes from the standpoint of performance of the oil-or-fat processed starch. In the test of dispersibility in water according to the present invention, the time from when a starch sample is introduced into water to when clumps formed from grains of the starch sample disappear is measured as the dispersion time, as per the examples that shall be described later.

### [Example 1]

The present invention is described in detail below by way of examples but is in no way limited to the examples below.

### Test example 1

### (Formulation of oil or-fat processed starch)

### (Starch sample 1)

An oil or fat composition was formulated using high-linoleic safflower oil (iodine value: 140) as the first oil or fat and using high-oleic safflower oil (iodine value: 90) as the second oil or fat, these two components being mixed at a mass ratio of 1:1. 0.3 parts by mass of the formulated oil or fat composition was added to 100 parts by mass of phosphoric acid cross-linked tapioca (made by Asia Modified Starch Co., Ltd.), and the combination was mixed under uniform stirring using a mixer to obtain a mixture. The mixture was heated for three hours at 130°C using a ventilated dryer to obtain an oil-or-fat processed starch.

### (Starch sample 2)

An oil-or-fat processed starch was obtained using the same procedure as that for starch sample 1, except that perilla oil (iodine value: 200) was used as the first oil or fat instead of high-linoleic safflower oil.

### (Starch sample 3)

An oil-or-fat processed starch was obtained using the same procedure as that for starch sample 1, except that high-linoleic sunflower oil (iodine value: 120) was used as the first oil or fat instead of high-linoleic safflower oil.

### (Starch sample 4)

An oil-or-fat processed starch was obtained using the same procedure as that for starch sample 1, except that canola oil (iodine value: 110) was used as the second oil or fat instead of high-oleic safflower oil.

### (Starch sample 5)

An oil-or-fat processed starch was obtained using the same procedure as that for starch sample 1, except that refined palm oil (iodine value: 50) was used as the second oil or fat instead of high-oleic safflower oil.

### (Starch sample 6)

An oil-or-fat processed starch was obtained using the same procedure as that for starch sample 1, except that the oil or fat composition was changed to only high-linoleic safflower oil.

### (Starch sample 7)

An oil-or-fat processed starch was obtained using the same procedure as that for starch sample 1, except that the oil or fat composition was changed to only perilla oil.

### (Starch sample 8)

An oil-or-fat processed starch was obtained using the same procedure as that for starch sample 1, except that the oil or fat composition was changed to only high-linoleic sunflower oil.

### (Starch sample 9)

An oil-or-fat processed starch was obtained using the same procedure as that for starch sample 1, except that the oil or fat composition was changed to only canola oil.

### (Starch sample 10)

An oil-or-fat processed starch was obtained using the same procedure as that for starch sample 1, except that the oil or fat composition was changed to only high-oleic safflower oil.

### (Starch sample 11)

An oil-or-fat processed starch was obtained using the same procedure as that for starch sample 1, except that perilla oil and high-linoleic sunflower oil were mixed at a mass ratio of 1:1 to formulate the oil or fat composition.

### (Test of dispersibility in water)

100 mL of water at 25°C was measured out and poured into a 200-mL beaker, a commercially available stirring bar (5 mm (width) × 5 mm (height) × 45 mm (total length)) was inserted into the beaker, and 10 g of a starch sample was added to the water under stirring at a speed of 400 rpm, whereupon the time required for the starch sample to be uniformly dispersed in the water was measured. More specifically, the hydrophobized starch was present in the form of clumps on the water surface, but became compatible with the water and migrated thereinto over time, and then was uniformly dispersed in the water due to stirring using the stirring bar. Therefore, the time required until the starch was uniformly dispersed (time until the clumps disappeared) was measured.

Oil-or-fat processed starches for which the dispersion time measured using the aforementioned procedure was within 15 minutes were assessed to have desirable dispersibility in water.

### (Measurement of slurry viscosity)

A starch measuring 90 g in terms of dry weight was uniformly dispersed in ice-chilled water using a mixer to formulate a 30%-concentration slurry having a total mass of 300 g. The viscosity of the formulated slurry was measured using a B-type viscometer (TVB-10M, made by Toki Sangyo KK). The viscosity was measured after a rotor was spun at a speed of 60 rpm for 15 seconds.

As was already mentioned above, the slurry viscosity is a parameter indicating the degree of hydrophobization of the starch samples, i.e., the degree of oil-or-fat processing in the starch (performance of the oil-or-fat processed starch). Oil-or-fat processed starches for which the slurry viscosity was 100 mPa·s or greater were assessed to have desirable performance.

The results from measuring the dispersibility in water (dispersion time) and the slurry viscosity of the starch samples are shown in table 1.

**[Table 1]**

| | Iodine value | | Slurry viscosity (mPa·s) | Dispersibility in water |
|---|---|---|---|---|
| | Oil or fat (1) | Oil or fat (2) | | |
| Starch sample 1 | 140 | 90 | 318 | 2 min 25 sec |
| Starch sample 2 | 200 | 90 | 614 | 7 min 51 sec |
| Starch sample 3 | 120 | 90 | 312 | 45 sec |
| Starch sample 4 | 140 | 110 | 391 | 4 min 34 sec |
| Starch sample 5 | 140 | 50 | 352 | 6 min 30 sec |
| Starch sample 6 | 140 | - | 306 | 22 min 57 sec |
| Starch sample 7 | 200 | - | 542 | 30 min or greater |
| Starch sample 8 | 120 | - | 321 | 16 min 40 sec |
| Starch sample 9 | - | 110 | 36 | 6 sec |
| Starch sample 10 | - | 90 | 19 | 5 sec |
| Starch sample 11 | 200 120 | - | 833 | 26 min 6 sec |

| | | | | |
|---|---|---|---|---|
| Oil or fat (1): oil or fat having iodine value of 120 or greater Oil or fat (2): oil or fat having iodine value of 119 or less | | | | |

According to table 1, starch samples 1 to 5, which were oil-or-fat processed starches containing a first oil or fat having an iodine value of 120 or greater and a second oil or fat having an iodine value having an iodine value of 119 or less, each had a slurry viscosity of 100 mPa·s or greater and were considered to have exceptional performance as oil-or-fat processed starches. Furthermore, due to having a dispersibility in water of within 15 minutes, starch samples 1 to 5 were capable of yielding satisfactory results for both dispersibility in water and high slurry viscosity. However, starch samples 6 to 8 and 11, in each of which only an oil or fat having an iodine value of 120 or greater was mixed, exhibited poor dispersibility in water, requiring a time equal to or greater than 15 minutes. Additionally, starch samples 9 and 10, in each of which only an oil or fat having an iodine value of 119 or less was mixed, had a slurry viscosity of less than 100 mPa·s, exhibiting insufficient performance as oil-or-fat processed starches.

### Test example 2

### (Formulation of oil-or-fat processed starch)

### (Starch sample 12)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 1:5.

### (Starch sample 13)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 1:7.

### (Starch sample 14)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 5:1.

### (Starch sample 15)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 7:1.

### (Starch sample 16)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 10:1.

### (Starch sample 17)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 1:10.

### (Starch sample 18)

An oil-or-fat processed starch was obtained using the same procedure as that for starch sample 1, except that the mixing ratio of the high-linoleic safflower oil serving as the first oil or fat and the high-oleic safflower oil serving as the second oil or fat was set to a mass ratio of 20:1.

The dispersibility in water (dispersion time) and the slurry viscosity of the starch samples were measured in the same manner as in test example 1. The results are shown in table 2.

**[Table 2]**

| | Iodine value | | Mass ratio | | Slurry viscosity (mPa·s) | Dispersibility in water |
|---|---|---|---|---|---|---|
| | Oil or fat (1) | Oil or fat (2) | Oil or fat (1) | Oil or fat (2) | | |
| Starch sample 12 | 140 | 90 | 1 | 5 | 125 | 12 sec |
| Starch sample 13 | 140 | 90 | 1 | 7 | 185 | 7 sec |
| Starch sample 14 | 140 | 90 | 5 | 1 | 391 | 7 min 14 sec |
| Starch sample 15 | 140 | 90 | 7 | 1 | 403 | 11 min 32 sec |
| Starch sample 16 | 140 | 90 | 10 | 1 | 532 | 14 min 42 sec |
| Starch sample 17 | 140 | 90 | 1 | 10 | 60 | 5 sec |
| Starch sample 18 | 140 | 90 | 20 | 1 | 524 | 15 min 39 sec |

| | | | | | | |
|---|---|---|---|---|---|---|
| Oil or fat (1): oil or fat having iodine value of 120 or greater Oil or fat (2): oil or fat having iodine value of 119 or less | | | | | | |

According to table 2, it is suggested that when the mixing ratio of the two oils or fats was exceedingly unbalanced, the effect of the present invention was not readily obtained.

### Test example 3

### (Formulation of oil-or-fat processed starch)

### (Starch sample 19)

An oil-or-fat processed starch was obtained using the same procedure as that for starch sample 1, except that the oil or fat composition was not formulated in advance, and instead the high-linoleic safflower oil serving as the first oil or fat and the high-oleic safflower oil serving as the second oil or fat were added in amounts of 0.15 parts by mass each per 100 parts by mass of the starch and the combination was mixed.

### (Starch sample 20)

An oil-or-fat processed starch was obtained using the same procedure as that for starch sample 1, except that the phosphoric acid cross-linked tapioca was changed to native tapioca.

### (Starch sample 21)

An oil-or-fat processed starch was obtained using the same procedure as that for starch sample 1, except that the phosphoric acid cross-linked tapioca was changed to corn starch.

### (Starch sample 22)

An oil-or-fat processed starch was obtained using the same procedure as that for starch sample 1, except that the phosphoric acid cross-linked tapioca was changed to native tapioca, and the oil or fat composition was changed to only high-linoleic safflower oil.

### (Starch sample 23)

An oil-or-fat processed starch was obtained using the same procedure as that for starch sample 1, except that the phosphoric acid cross-linked tapioca was changed to corn starch, and the oil or fat composition was changed to only high-linoleic safflower oil.

The dispersibility in water (dispersion time) and the slurry viscosity of the starch samples were measured in the same manner as in test example 1. The results are shown in table 3.

**[Table 3]**

| | Iodine value | | Raw-material starch | Slurry viscosity (mPa·s) | Dispersibility in water |
|---|---|---|---|---|---|
| | Oil or fat (1) | Oil or fat (2) | | | |
| Starch sample 19 | 140 | 90 | Phosphoric acid cross-linked tapioca | 302 | 1 min 29 sec |
| Starch sample 20 | 140 | 90 | Tapioca | 262 | 1 min 32 sec |
| Starch sample 21 | 140 | 90 | Corn starch | 368 | 13 min 27 sec |
| Starch sample 22 | 140 | - | Tapioca | 368 | 15 min 54 sec |
| Starch sample 23 | 140 | - | Corn starch | 465 | 30 min or greater |

| | | | | | |
|---|---|---|---|---|---|
| oil or fat (1): oil or fat having iodine value of 120 or greater Oil or fat (2): oil or fat having iodine value of 119 or less | | | | | |

According to starch sample 19, it was not essential to mix the two oils or fats in advance and formulate the oil or fat composition, and it was indicated that the effect of the invention was obtainable even by mixing after addition to the starch. Additionally, according to starch samples 20 and 21, it was indicated that the effect of the present invention was exhibited irrespective of the type of starch serving as the raw ingredient of the oil-or-fat processed starch.

### Test example 4

### (Formulation of oil-or-fat processed starch)

### (Starch sample 24)

High-linoleic safflower oil (iodine value: 140) serving as the first oil or fat and high-oleic safflower oil (iodine value: 90) serving as the second oil or fat were mixed at a mass ratio of 1:1 to formulate an oil or fat composition. 0.3 parts by mass of the formulated oil or fat composition was added to 100 parts by mass of phosphoric acid cross-linked tapioca, and the combination was mixed under uniform stirring using a mixer to obtain a mixture. A paper bag was filled with 100 kg of the mixture in increments of 20 kg and was stored for five days in a warehouse at 70°C to obtain an oil-or-fat processed starch. During storage, another paper bag was placed on top of the aforementioned paper bag, whereby a load of 2,000 kg was applied to the 100 kg of sample.

### (Starch sample 25)

An oil-or-fat processed starch was obtained using the same procedure as that for starch sample 24, except that the oil or fat composition was changed to only high-linoleic safflower oil.

### (Confirmation of caking)

Two paper bags containing oil-or-fat processed starches formulated as described above were taken apart, and the amount of caked matter was evaluated through visual inspection. Additionally, the hardness of the resultant caked clumps was evaluated through breaking by hand.

The results are shown in table 4.

**[Table 4]**

| Starch sample | Amount of caked matter | Hardness of caked matter |
|---|---|---|
| Starch sample 24 | Low | Soft, readily collapses |
| Starch sample 25 | Greater than in starch sample 24 | Hard, does not readily collapse |

According to table 4, the amount of caked matter was lower in starch sample 24, in which two oils or fats were used in combination, than in starch sample 25. In addition, the caked clumps were softer and collapsed more readily in starch sample 24, and it was confirmed that starch sample 24 had superior quality enabling easier handling.

### Application example 1

### (Test of binding property of coating for fried pork cutlet using pork loin meat)

A test of the binding property of a coating was implemented using oil-or-fat processed starches formulated according to the test examples described above (specifically starch samples 1, 12, 6, 10, and 17). Pork loin meat was used as the main ingredient of a fried food. The pork loin meat, from which the fat was trimmed, was sliced into 10-mm-thick pieces and frozen in advance, and only a surface portion was thawed using warm air immediately before use. A batter was formulated by adding 0.4 parts by mass of a polysaccharide thickener and 180 parts by mass of ice-chilled water to 100 parts by mass of the starch and then stirring and mixing the combination. The batter was applied to the pork loin meat so as to reach a relative quantity of 30 mass%, and the pork loin meat was breaded and frozen. After being stored under freezing, the pork loin meat was fried for five minutes at 175°C using soybean white oil to prepare pork cutlets. The pork cutlets were cut after three minutes of frying, and the binding property between the meat and the coating was evaluated through visual inspection after 120 minutes. The evaluation criteria are as follows.
1: Completely peeled away
2: Substantially peeled away
3: Halfway peeled away
4: Substantially binding
5: Completely binding

The evaluation was conducted by five experienced panelists, and the evaluation results were displayed as averaged point values (rounded to one decimal place). The results are shown in table 5.

**[Table 5]**

| Starch sample | Binding property | |
|---|---|---|
| Starch sample 1 | | 4.8 |
| Starch sample 12 | | 5 |
| Starch sample 6 | | 3.6 |
| Starch sample 10 | | 2.4 |
| Starch sample 17 | | 2.2 |

According to table 4, the coatings prepared using starch samples 1 and 12, which yielded satisfactory results for both dispersibility in water and slurry viscosity, had good binding property. However, the coating prepared using starch sample 6, which exhibited high slurry viscosity but poor dispersibility in water, had worse binding property than the aforementioned coatings. Additionally, the coatings prepared using starch samples 10 and 17, which exhibited low slurry viscosity, had even bad binding property. According to these results, it was indicated that oil-or-fat processed starches having a slurry viscosity at or above a fixed level have high performance (biding property), and that there is a possibility for the performance (biding property) of the oil-or-fat processed starches to be affected not only by slurry viscosity but also by dispersibility in water.

### Application example 2

### (Evaluation of processed-meat food product)

An evaluation of a processed-meat food product (food product processed from seafood meat) was implemented using oil-or-fat processed starches formulated according to the test examples described above (specifically starch samples 1, 12, 6, and 10). 50 parts by mass of frozen walleye pollock surimi was thawed, after which the thawed surimi was chopped using a meat grinder equipped with a plate in which the diameter of exit holes was 4.8 mm and also roughly cut using a food cutter. 2 parts by mass of table salt and 18 parts by mass of ice water were added to the cut surimi and the combination was cut, after which 12 parts by mass of the oil-or-fat processed starch and 18 parts by mass of ice water were added and the combination was cut. A tubular vinylidene chloride film measuring 45 mm in diameter was filled with the resultant dough, and the tube of dough was boiled in hot water at 85°C to obtain *kamaboko.*

### (Evaluation of hardness of kamaboko)

The texture of the resultant *kamaboko* was evaluated with respect to hardness (gel strength), which is an important evaluation category for food products processed from seafood meat. The evaluation criteria are as follows.
1: Very soft
2: Moderately soft
3: Somewhat soft
4: Somewhat hard
5: Moderately hard

The evaluation was conducted by five experienced panelists, and the evaluation results were displayed as averaged point values (rounded to one decimal place).

### (Elasticity)

The texture of the resultant *kamaboko* was evaluated with respect to elasticity, which is an important evaluation category for fish meat kneaded food products. The evaluation criteria are as follows.
1: Very brittle
2: Moderately brittle
3: Somewhat brittle
4: Somewhat elastic
5: Moderately elastic

The evaluation was conducted by five experienced panelists, and the evaluation results were displayed as averaged point values (rounded to one decimal place).

### (Measurement of breaking load)

The breaking load of the resultant *kamaboko* was measured. The *kamaboko* was cut into cuboids (10 mm × 10 mm × 20 mm), and the breaking load (gf) when the middle of long-side of the samples were sheared vertically under the following conditions was measured using a rheometer (RE2-33005B, made by Yamaden Inc.).
- Plunger: wedge-shaped
- Breaking distortion factor: 98%
- Load cell: 2039.4 gf (20N)
- Shear speed: 1 mm/sec

Table 6 shows the results of the evaluation of the food product processed from seafood meat.

**[Table 6]**

| Starch sample | Breaking load (gf) | Hardness | Elasticity | |
|---|---|---|---|---|
| Starch sample 1 | 339 | 4 | | 3.8 |
| Starch sample 12 | 393 | 5 | | 4.6 |
| Starch sample 6 | 246 | 2 | | 2.6 |
| Starch sample 10 | 285 | 3 | | 3 |

According to table 6, the *kamaboko* prepared using starch samples 1 and 12, which yielded satisfactory results for both dispersibility in water and slurry viscosity, had high gel strength and high marks in the sensory evaluation. However, the *kamaboko* prepared using starch sample 6, which exhibited poor dispersibility in water, or starch sample 10, which exhibited low slurry viscosity, had low gel strength and low marks in the sensory evaluation. According to these results, it was indicated that oil-or-fat processed starches having a slurry viscosity at or above a fixed level have high performance (effect for improving texture), and that there is a possibility for the performance (effect for improving texture) of the oil-or-fat processed starches to be affected not only by slurry viscosity but also by dispersibility in water. Because these results were produced through an interaction between the proteins in the seafood and the oil-or-fat processed starches, an effect similar to that in the present application example would also be exhibited in food products processed from land-reared meat that are prepared using livestock meat.

## Claims

1. An oil-or-fat processed starch **characterized by** including: a first oil or fat having an iodine value of 120 or greater; and a second oil or fat having an iodine value of 119 or less, the second oil or fat differing from the first oil or fat in regard to source raw ingredient or processing method.

2. The oil-or-fat processed starch according to claim 1, wherein the difference between the iodine values of the first oil or fat and the second oil or fat is 10-170.

3. The oil-or-fat processed starch according to claim 1, wherein the mass ratio of the first oil or fat and the second oil or fat is 15:1-1:8.

4. The oil-or-fat processed starch according to claim 1, wherein the dispersion time according to the following test of dispersibility in water is within 15 minutes.
(Test of dispersibility in water)
100 mL of water at 25°C is measured out and poured into a 200-mL beaker, a stirring bar (5 mm (width) × 5 mm (height) × 45 mm (total length)) is inserted into the beaker, and 10 g of a starch sample is added to the water under stirring at a speed of 400 rpm, whereupon the time required for the starch sample to be uniformly dispersed in the water is measured.

5. The oil-or-fat processed starch according to claim 1, wherein the slurry viscosity according to the following method for measuring slurry viscosity is 100 mPa·s or greater.
(Measurement of slurry viscosity)
A starch sample measuring 90 g in terms of dry weight is uniformly dispersed in ice-chilled water using a mixer to formulate a 30%-concentration slurry having a total mass of 300 g. The viscosity of the formulated slurry is measured using a B-type viscometer. The viscosity is measured after a rotor is spun at a speed of 60 rpm for 15 seconds.

6. A method for producing an oil-or-fat processed starch, the method being **characterized in** comprising a step for:
adding a first oil or fat having an iodine value of 120 or greater and a second oil or fat having an iodine value of 119 or less to a starch, the second oil or fat differing from the first oil or fat in regard to source raw ingredient or processing method; and then subjecting the combination to an aging treatment.

7. The method for producing an oil-or-fat processed starch according to claim 6, wherein the difference between the iodine values of the first oil or fat and the second oil or fat is 10-170.

8. The method for producing an oil-or-fat processed starch according to claim 6, wherein the mass ratio of the first oil or fat and the second oil or fat is 15:1-1:8.

9. A coating for a fried food product, the coating being **characterized by** containing an oil-or-fat processed starch including: a first oil or fat having an iodine value of 120 or greater; and a second oil or fat having an iodine value of 119 or less, the second oil or fat differing from the first oil or fat in regard to source raw ingredient or processing method.

10. A fried food product **characterized in** comprising a coating that contains an oil-or-fat processed starch including: a first oil or fat having an iodine value of 120 or greater; and a second oil or fat having an iodine value of 119 or less, the second oil or fat differing from the first oil or fat in regard to source raw ingredient or processing method.

11. An additive for a processed-meat food product, the additive being **characterized by** containing an oil-or-fat processed starch including: a first oil or fat having an iodine value of 120 or greater; and a second oil or fat having an iodine value of 119 or less, the second oil or fat differing from the first oil or fat in regard to source raw ingredient or processing method.

12. A processed-meat food product **characterized by** containing an oil-or-fat processed starch including: a first oil or fat having an iodine value of 120 or greater; and a second oil or fat having an iodine value of 119 or less, the second oil or fat differing from the first oil or fat in regard to source raw ingredient or processing method.
